# EUROPÄISCHE PATENTSCHRIFT

(11) **EP 3 204 134 B1**
(45) Veröffentlichungstag und Bekanntmachung des Hinweises auf die Patenterteilung: **01.05.2019**
(21) Anmeldenummer: 15781326.2
(22) Anmeldetag: 07.10.2015
(51) Int. Cl.: B01D 3/14, C01B 33/107

(54) **REINIGUNG VON CHLORSILANEN MITTELS DESTILLATION UND ADSORPTION**
PURIFICATION OF CHLOROSILANES BY MEANS OF DISTILLATION AND ADSORPTION
PURIFICATION DE CHLOROSILANES PAR DISTILLATION ET ADSORPTION

(30) Priorität: 09.10.2014 DE 102014220539
(43) Veröffentlichungstag der Anmeldung: 16.08.2017
(60) Teilanmeldung: 17198903.1
(73) Patentinhaber: Wacker Chemie AG, 81737 München (DE)
(72) Erfinder: AIGNER, Maximilian, 84489 Burghausen (DE); PAETZOLD, Uwe, 84489 Burghausen (DE); PROCHASKA, Jan, 84561 Mehring (DE)
(74) Vertreter: Belz, Ferdinand
(86) Internationale Anmeldenummer: PCT/EP2015/073195
(87) Internationale Veröffentlichungsnummer: WO 2016/055549

(56) Entgegenhaltungen:
- EP-A1- 2 266 674
- DE-A1-102008 002 537
- US-A1- 2009 060 819
- US-A1- 2013 121 907

## Beschreibung

Gegenstand der Erfindung sind Verfahren und Vorrichtungen zur Reinigung von Chlorsilanen mittels Destillation und Adsorption.

Insbesondere betrifft die Erfindung ein Verfahren zur Trennung eines Mehrkomponentengemisches enthaltend Chlorsilane in seine Komponenten bei gleichzeitiger Abreicherung von Verunreinigungen (Bor, Phosphor, Arsen) in den Chlorsilangemischen.

Chlorsilane wie Trichlorsilan (TCS) werden zur Abscheidung von polykristallinem Silicium eingesetzt.

TCS wird hauptsächlich über drei verschiedene Verfahren erzeugt:
A) Si + 3 HCl → SiHCl₃ + H₂ + Nebenprodukte (Hydrochlorierung von metallurgischem Silicium)
B) Si + 3 SiCl₄ + 2 H₂ → 4 SiHCl₃ + Nebenprodukte (Umsetzung von metallurgischem Silicium mit Siliciumtetrachlorid / STC und Wasserstoff)
C) SiCl₄ + H2 → SiHCl₃ + HCl + Nebenprodukte (Hydrierung von Siliciumtetrachlorid / STC)

Als Nebenprodukt fällt u.a. Dichlorsilan (DCS) an.

Vorzugsweise handelt es sich um ein Gemisch aus Chlorsilanen enthaltend TCS, STC, DCS sowie Spuren weiterer Verunreinigungen (Methylchlorsilane, Kohlenwasserstoffe, Hochsieder).

Um hochreines Trichlorsilan zu erhalten, erfolgt anschließend jeweils eine Destillation. Eine wesentliche Aufgabe der Destillation besteht in der Abtrennung von bor-, phosphor- und arsenhaltigen Verbindungen, da diese im abgeschiedenen Silicium als p- bzw. n-Dotierstoffe unerwünscht sind. Die Reinheitsanforderungen an das für die Abscheidung eingesetzte Trichlorsilan liegen bezüglich dieser Verunreinigungen im Bereich von wenigen ppta.

Destillative Verfahren sind in der chemischen Verfahrenstechnik üblich, um Gemische verschiedener relativer Flüchtigkeit und/oder ineinander löslicher Stoffe thermisch zu trennen.

Für die kontinuierliche, destillative Zerlegung von Mehrstoffgemischen sind verschiedene Verfahrensvarianten gebräuchlich.

Im einfachsten Fall wird ein Zulaufgemisch, bestehend aus einer Leicht- und einer Schwersiederfraktion in seine zwei Fraktionen, eine leichtsiedende Kopffraktion und eine schwersiedende Sumpffraktion, zerlegt. Dabei wird das zu trennende Gemisch zwischen Sumpf und Kopf der Destillationskolonne eingebracht. Der Zulauf unterteilt die Kolonne in einen Verstärkungsteil und einen Abtriebsteil. Die schwersiedende Fraktion wird im Sumpf aus der Kolonne entnommen. Ein Teil des Konzentrats wird durch eine Heizung (z.B. einem Naturumlaufverdampfer), die im Sumpfbereich eingebaut ist, verdampft. Der Leichtsieder steigt als Brüden in der Kolonne hoch, wird am Kopf der Kolonne aus dieser abgezogen und in einem Kondensator verflüssigt. Ein Teil des Kondensats wird wieder in die Kolonne zurückgeführt und läuft im Gegenstrom zu den aufsteigenden Brüden nach unten (Rücklauf).

Bei der Auftrennung von Zulaufgemischen, bestehend aus einem Mehrkomponentengemisch (A, B, C) in mehr als zwei Fraktionen müssen dann jedoch mehrere konventionelle Destillationskolonnen eingesetzt werden. Dafür gibt es mehrere Möglichkeiten.

Beim a-Pfad wird in einer ersten Kolonne der Leichtsieder A als Kopfprodukt abgetrennt. Die Sumpffraktion ist ein Gemisch aus Mittelsieder B und Schwersieder C, das in einer nachgeschalteten Kolonne in die beiden reinen Substanzen B und C aufgetrennt wird.

Bei der stofflichen Kopplung mit Vortrennung (a/c-Pfad) erfolgt die Trennung in der ersten Kolonne so, dass das Kopfprodukt keinen Schwersieder C und das Sumpfprodukt keinen Leichtsieder A enthält. Die Trennung erfolgt somit zwischen dem Leichtsieder A und dem Schwersieder C. Der Mittelsieder B ist sowohl in der Kopffraktion als auch in der Sumpffraktion enthalten. Beide Fraktionen AB und BC werden in je einer nachgeschalteten Kolonne in die reinen Produkte A, B, C zerlegt. Damit benötigt diese Variante drei Trennschritte.

Beim c-pfad wird in der ersten Kolonne C als reines Sumpfprodukt abgetrennt und Gemisch AB als Kopfprodukt üblicherweise dampfförmig an die zweite Kolonne übergeben.

Grundsätzlich gilt bei der Auftrennung eines Dreikomponentengemisches, dass die Wahl des geeigneten Pfades (a-Pfad, c-Pfad, a/c Pfad) von der Zusammensetzung der Zugabe abhängt.

Bei hohen Gehalten an Leichtsieder A ist der a-Pfad bevorzugt. Andererseits ist der c-Pfad bei hohen Gehalten an Schwersieder C zu bevorzugen.

Ist der Mittelsiederanteil B hoch, wird bevorzugt der a/c-Pfad gewählt.

Bei der stofflichen Kopplung mit Vorkolonne sind beide Kolonnen stofflich gekoppelt (damit zweifache stoffliche Kopplung; sog. Petlyuk-Verschaltung).

US 20120193214 A1 offenbart ein Verfahren zur destillativen Reinigung von Chlorsilanen, umfassend Bereitstellen einer borhaltigen Mischung aus Chlorsilanen enthaltend TCS, DCS und STC und destillative Reinigung der Mischung aus Chlorsilanen in mehreren Destillationskolonnen, wobei niedrig-siedende Borverbindungen mittels Kopfströmen enthaltend borangereichertes DCS und höhersiedende Borverbindungen mittels eines borangereicherten Sumpfstromes enthaltend Hochsieder aus den Destillationskolonnen abgezweigt werden. DE102008002537A1 offenbart auch ein verfahren zur destillativen Reinigung von Chlorsilanen.

Neben rein destillativen Verfahren ist es auch bekannt, Adsorber einzusetzen.

Der Adsorber kann verschiedene Funktionen erfüllen. Spurenverbindungen können durch Adsorptionsmechanismen aus dem Trichlorsilan zurückgehalten werden. Dies ist vor allem bei polaren Molekülen eine effektive Methode der Abtrennung. Weiterhin kann das Adsorbens konditioniert werden, so dass auf dessen Oberfläche eine chemische Reaktion zur Umwandlung dieser Verbindungen einsetzt. So ist die gezielte Hydrolyse auf mit Wasser konditionierten Adsorberoberflächen eine bekannte Methode zur Erzeugung von Bor-Sauerstoff-Verbindungen, die in nachgeschalteten Destillationsschritten deutlich einfacher abgetrennt werden können, siehe z.B. US 4713230 A.

In US 20110184205 A1 wird ein Verfahren zur Behandlung einer Zusammensetzung enthaltend mindestens eine Siliciumverbindung sowie mindestens ein Fremdmetall und/oder eine Fremdmetall enthaltende Verbindung beschrieben, wobei die Zusammensetzung in einem ersten Schritt mit mindestens einem Adsorptionsmittel und/oder mindestens einem ersten Filter in Kontakt gebracht wird, und gegebenenfalls in einem weiteren Schritt mit mindestens einem Filter in Kontakt gebracht wird, wobei eine Zusammensetzung gewonnen wird, in der der Gehalt des Fremdmetalls und/oder der Fremdmetall enthaltenden Verbindung vermindert ist.

Hier wird der Bor-Gehalt in Chlorsilanen durch Inkontaktbringen mit wasserfreien Adsorbermittel (Aktivkohle, Silikate wie Silicagel, Zeolithe, organische Harze) abgesenkt. Allerdings werden sehr große Mengen an Asdorbermittel (120 g/ 250 ml TCS) benötigt, um den gewünschten Reinigungszweck zu erzielen. Dies macht das Verfahren unwirtschaftlich, zumal ein kontinuierlicher Prozess kaum möglich ist, was bei der Herstellung von Chlorsilanen in Halbleiter-Qualität wirtschaftlich nachteilig ist. Der Einsatz von Adsorbern erfordert zudem weiteren apparativen Aufwand (wie Filtration) und beinhaltet das Risiko zum Eintrag anderer Verunreinigungen in das Halbleiter-reine Produkt.

US 20130121907 A1 offenbart ein Verfahren zum Entfernen mindestens einer borhaltigen Verunreinigung aus einem Gemisch enthaltend Trichlorsilan, um ein gereinigtes Produkt enthaltend Trichlorsilan zu bilden. Dabei erfolgt ein teilweises Entfernen der borhaltigen Verunreinigung aus dem Gemisch, um ein teilweise gereinigtes Gemisch enthaltend Trichlorsilan zu erhalten.
Jenes teilweise gereinigte Gemisch wird einer Kolonne über eine seitliche Zulauföffnung zugeführt. Aus der Kolonne abgeführt werden
a) ein borhaltige Verunreinigung enthaltendes Kopfprodukt
b) ein borhaltige Verunreinigung enthaltendes Sumpfprodukt
c) und ein gereinigtes Gemisch enthaltend Trichlorsilan.
Das teilweise Entfernen der borhaltigen Verunreinigung kann darin bestehen, dass das Gemisch einer Destillationskolonne zugeführt wird, wobei ein Kopfprodukt enthaltend borhaltigen Verunreinigungen abgeführt wird, wobei ein teilweise gereinigtes Gemisch als Sumpfprodukt entnommen wird. Dieses Sumpfprodukt kann über einen Adsorber z.B. ein Silicagelbett geführt werden, bevor es der zweiten Kolonne zugeführt wird.

Trotz einer Kombination aus Adsorbern und Destillationskolonnen haben die Destillationsschritte bei der Herstellung von Trichlorsilan in Halbleiterqualität nach wie vor einen enorm hohen Energiebedarf. Eine interessante Möglichkeit zur Verringerung des Energiebedarfs bietet die Technologie der Trennwandkolonne. Diese basiert auf dem Prinzip der stofflichen Kopplung und erlaubt eine Reduzierung des Energiebedarfs um bis zu 50 %. Da dieses Verfahren die Trennaufgabe von zwei Apparaten übernimmt, können damit auch Investitionskosten eingespart werden.

Konventionelle Trennwandkolonnen besitzen eine in Kolonnenlängsrichtung angeordnete vertikale Trennwand, die eine Quervermischung von Flüssigkeits- und Brüdenströmen in Teilbereichen der Kolonne verhindert. Bei dieser Kolonne verläuft also über einen Teil der Kolonnenhöhe mindestens eine vertikale Trennwand, welche den Querschnitt in mindestens zwei Abschnitte links und rechts der Trennwand aufteilt.

Dabei ist es möglich, zum Beispiel ein Dreistoffgemisch in einer einzigen Kolonne in seine drei reinen Bestandteile zu zerlegen, wozu normalerweise zwei konventionelle Kolonnen benötigt würden.

Die in Kolonnenlängsrichtung angeordnete Trennwand teilt den Kolonneninnenraum in einen Zulaufteil, einen Entnahmeteil, einen oberen gemeinsamen Kolonnenteil (Auftriebsteil) und einen unteren gemeinsamen Kolonnenteil (Abtriebsteil).

Die Kombination der Trennwandkolonne mit dem bisherigen Einsatz von Adsorbern erweist sich allerdings als aufwändig in der Umsetzung. Durch die stoffliche Kopplung in der Trennwandkolonne erfolgen in einem Apparat zwei Trennaufgaben. Sowohl leichtsiedende, als auch schwersiedende Borverbindungen werden in dem Apparat abgetrennt. Eine Positionierung des Adsorbers in der Zugabe zur Kolonne ist nicht ratsam, da an dieser Stelle der Gehalt an Borverbindungen noch sehr hoch ist, was zu einer sehr raschen Beladung des Adsorbers führen würde. Um den gleichen Effekt des Adsorbers in einer herkömmlichen Trennwandkolonne zu erzielen, müsste diese mit entsprechenden Einbauten ausgerüstet werden

Es ist bekannt, katalytisch aktive Einbauten in Trennwandkolonnen zu verwenden. EP1513791 B1 offenbart eine Destillations-Kolonne mit mindestens zwei vertikalen Destillations-Abschnitten, wobei mindestens einer von den Abschnitten Katalysator enthält und mindestens einer von den Abschnitten frei von Katalysator ist, wobei die Abschnitte durch eine Wand getrennt sind, die sich über einen vertikalen Teil von der Destillations-Kolonne erstreckt, wobei der vertikale Teil weniger als die Gesamthöhe der Kolonne umfasst und die Abschnitte sich in fluider Kommunikation um einen vertikalen Terminus bzw. Abschluss von der Wand befinden.

Ein ähnliches Konzept wäre prinzipiell auch für den Einsatz von Adsorbern in einer Trennwandkolonne denkbar. Da die Adsorber allerdings in regelmäßigen Abständen gewechselt werden müssen (Beladung, Konditionierung), ist diese Variante nachteilig. Da die Destillation ein kontinuierlicher Prozess ist, sind längere Unterbrechungen des Betriebs durch einen regelmäßig notwendigen Wechsel der Einbauten nicht gewünscht.

Aus der beschriebenen Problematik ergab sich die Aufgabenstellung der Erfindung.

Die Aufgabe der Erfindung wird gelöst durch ein Verfahren zur destillativen Trennung eines Mehrkomponentengemisches, enthaltend
einen Leichtsieder umfassend Dichlorsilan und wenigstens eine bor-, phosphor- oder arsenhaltige Verunreinigung,
einen Mittelsieder umfassend Trichlorsilan und wenigstens eine bor-, phosphor- oder arsenhaltige Verunreinigung,
und einen Schwersieder umfassend Siliciumtetrachlorid,
wobei das Mehrkomponentengemisch einer ersten Destillationskolonne zugeführt wird, durch die der wenigstens eine Schwersieder umfassend Siliciumtetrachlorid als Sumpffraktion abgetrennt wird und eine Kopffraktion umfassend Dichlorsilan, Trichlorsilan und wenigstens eine bor-, phosphor- oder arsenhaltige Verunreinigung einer zweiten Destillationskolonne zugeführt wird, wobei in der zweiten Destillationskolonne der wenigstens eine Mittelsieder umfassend Trichlorsilan über einen Seitenabzug und der wenigstens eine Leichtsieder umfassend Dichlorsilan als Kopffraktion abgetrennt werden, wobei wenigstens ein Sumpfabzug der zweiten Destillationskolonne über einen Adsorber zur Abtrennung der wenigstens einen bor-, phosphor- oder arsenhaltigen Verunreinigung geführt und anschließend wieder der ersten Destillationskolonne als Rücklauf zugeführt wird, wobei beide Destillationskolonnen vertikale Trennwände aufweisen.

Falls zwei Sumpfabzüge der zweiten Destillationskolonne vorhanden sind, können einer der Flüssigkeitsströme oder beide Flüssigkeitsströme über den Adsorber geführt und dann als Rücklauf der ersten Destillationskolonne zugeführt werden.

Statt eines Adsorber in den Flüssigkeitsströmen zwischen erster und zweiter Destillationskolonne kann der Adsorber auch in den Produktdampfströmen von erster zu zweiter Destillationskolonne platziert werden. Die Kopffraktion der ersten Destillationskolonne wird vorzugweise über zwei Dampfströme dem Abtriebsteil der zweiten Destillationskolonne zugeführt. Es kann vorgesehen sein, dass nur einer der Dampfströme über den Absorber geführt wird, bevor er der zweiten Destillationskolonne zugeführt wird. Vorzugweise werden beide Dampfströme über den Adsorber geführt.

In einer Ausführungsform sind zwei Adsorber vorhanden, wobei über einen ersten Adsorber ein oder zwei Dampfströme zwischen erster und zweiter Destillationskolonne geführt werden und über einen zweiten Adsorber ein oder zwei Flüssigkeitsströme von zweiter Destillationskolonne in den Rücklauf der ersten Destillationskolonne geführt werden.
Besonders bevorzugt ist, wenn alle Flüssigkeitsströme und alle Dampfströme zwischen den beiden Destillationskolonnen jeweils über einen Adsorber geführt werden.

Die Aufgabe wird auch gelöst durch eine Vorrichtung zur destillativen Trennung eines Mehrkomponentengemisches, umfassend zwei Destillationskolonnen, die stofflich miteinander gekoppelt sind, indem Brüden einer ersten Destillationskolonne kommunikativ mit dem Sumpf einer zweiten Destillationskolonne und Sumpfabzüge der zweiten Destillationskolonne kommunikativ mit einer Rücklaufsektion der ersten Destillationskolonne verbunden sind, wobei in die kommunikative Verbindung zwischen Sumpfabzügen der zweiten Destillationskolonne und der Rücklaufsektion der ersten Destillationskolonne ein Adsorber zur Abtrennung von bor-, phosphor- oder arsenhaltigen Verunreinigungen eingebracht ist, wobei beide Destillationskolonnen vertikale Trennwände aufweisen, wobei die zweite Kolonne einen oder mehrere Seitenabzüge unterhalb des Kopfabzuges und oberhalb des Sumpfabzuges aufweist.

Vorzugweise ist in beide kommunikativen Verbindungen zwischen erster und zweiter Destillationskolonne jeweils ein Adsorber zur Abtrennung von bor-, phosphor- oder arsenhaltigen Verunreinigungen eingebracht.

Die Erfindung sieht vor, Destillationskolonnen stofflich miteinander zu koppeln. Zudem sind vertikale Trennwände in jede der Destillationskolonnen eingebracht, wobei die Trennwände so definiert sind, dass sich Flüssigkeit und Dämpfe nicht mischen können. Daher reicht die Trennwand der ersten Destillationskolonne bis an das obere Ende der Destillationskolonne, die Trennwand der zweiten Destillationskolonne bis an das untere Ende der Destillationskolonne.
Die in Kolonnenlängsrichtung angeordnete Trennwand der ersten Destillationskolonne teilt den Kolonneninnenraum in einen Zulaufteil, einen Entnahmeteil und einen unteren gemeinsamen Kolonnenteil (Abtriebsteil), so dass die Bereiche der Destillationskolonne über dem Sumpfteil miteinander in Fluidverbindung stehen. Die in Kolonnenlängsrichtung angeordnete Trennwand der zweiten Destillationskolonne teilt den Kolonneninnenraum in einen Zulaufteil, einen Entnahmeteil und einen oberen gemeinsamen Kolonnenteil (Auftriebsteil), so dass die Bereiche der Destillationskolonne über dem Kopfteil miteinander in Fluidverbindung stehen.

Durch die stoffliche Kopplung der beiden Destillationskolonnen wird eine Addition der theoretischen Trennstufen der beiden Destillationskolonnen erreicht. Bei Verwendung von zwei baugleichen Destillationskolonnen resultiert so eine Verdopplung der theoretischen Trennstufen.

Die stoffliche Kopplung wird bewerkstelligt, in dem jede der Destillationskolonnen mit der jeweils anderen mindestens zwei Verknüpfungen an räumlich getrennten Stellen aufweist.

Zwei solche stofflich gekoppelten Destillationskolonnen sind hinsichtlich des Energiebedarfs mit einer einzigen Trennwandkolonne gleichwertig. Damit lassen sich große Energieeinsparungen realisieren, wobei aber im Vergleich zur Neuanschaffung einer herkömmlichen, einzelnen Trennwandkolonne niedrigere Investitionskosten anfallen, da herkömmliche, bereits bestehende Destillationskolonnen im Rahmen eines Revamp zu Trennwandkolonnen umgebaut werden und so miteinander verschaltet werden können, dass diese genannten zwei mit Trennwänden versehene Destillationskolonnen die Aufgabe einer Trennwandkolonne nach Stand der Technik erfüllen.

Die stofflich gekoppelten Destillationskolonnen können jeweils mit einem eigenen Verdampfer zum Verdampfen von flüssigen Sumpfströmen und/oder einem Kondensator zur Kondensation von dampfförmigen Brüdenströmen ausgestattet sein. Vorzugsweise umfassen die Destillationskolonnen ein oder mehrere Verdampfersysteme, die Wasserdampf oder Thermoöle verschiedener Druck- und Temperaturstufen als Betriebsmittel benutzen. Vorzugweise umfassen die Destillationskolonnen ein oder mehrere Kondensationssysteme, die Kühlwasser oder Kühlsole verschiedener Druck- und Temperaturstufen als Betriebsmittel benutzen. Vorzugweise werden in einem ersten Kondensationsschritt nicht kondensierbare Kopfstromkomponenten einem weiteren Kondensationsschritt und/oder einem Wäschersystem zugeführt.

Die beiden Destillationskolonnen werden vorzugweise bei einem Abgasdruck von -1 bis + 10 bar und einem Siede-Temperaturbereich von -20 bis + 200 °C betrieben. Die Leichtsiederfraktion und die Hochsiederfraktion können aus unterschiedlichen Destillationskolonnen entnommen werden. Die Betriebsdrücke der Destillationskolonnen werden so eingestellt, dass die vorgeschriebene Strömungsrichtung eingehalten wird. Auch ist es möglich, den Sumpfstrom der ersten Destillationskolonne in einem Verdampfer teilweise oder vollständig zu verdampfen und anschließend zweiphasig oder in Form eines gasförmigen und eines flüssigen Stromes zur zweiten Destillationskolonne zu führen.

Diese Ausführung erlaubt den einfachen Einsatz von Adsorbern in den Verbindungsströmen zwischen den beiden Destillationskolonnen. Für die Platzierung der Adsorber eignet sich sowohl der Produktdampfstrom zwischen den beiden Destillationskolonnen als auch der Flüssigkeitsstrom zwischen den beiden Destillationskolonnen. Durch die Ausführung der Trennwandkolonne mit zwei gekoppelten Destillationskolonnen ist eine einfache Integration von Adsorbern möglich. Diese können in den gewünschten Abständen gewechselt bzw. konditioniert werden. Weiterhin können die Adsorber doppelt ausgeführt werden, so dass keine Einschränkungen bei der Betriebsweise der Trennwandkolonne resultieren. Es entstehen so keine Stillstandzeiten an der Trennwandkolonne aufgrund eines Wechsels der Adsorber.

Stoffliche Kopplung soll im Rahmen der Erfindung bedeuten, dass jeweils entsprechende Zu- und Rückläufe zwischen den Destillationskolonnen vorhanden sind.

Durch die Trennung der Flüssigkeits- und Produktdampfströme aufgrund der Fahrweise als Trennwandkolonne entstehen für den Betrieb der Adsorber zusätzliche Freiheitsgrade, die in der klassischen Schaltung nicht existieren. Dies ist bei der Abtrennung von borhaltigen Verbindungen aus chlorsilanhaltigen Produktströmen von Vorteil.

Bevorzugte Ausführungsvarianten der Erfindung und deren Unterschiede zum Stand der Technik werden im Folgenden anhand von Figuren erläutert.

Die bezüglich der vorstehend aufgeführten Ausführungsformen des erfindungsgemäßen Verfahrens angegebenen Merkmale können jeweils auf die entsprechende erfindungsgemäße Vorrichtung übertragen werden. Umgekehrt können die bezüglich der vorstehend ausgeführten Ausführungsformen der erfindungsgemäßen Vorrichtung angegebenen Merkmale jeweils auf das entsprechende erfindungsgemäße Verfahren übertragen werden. Diese und andere Merkmale der erfindungsgemäßen Ausführungsformen werden in der Figurenbeschreibung und in den Ansprüchen erläutert. Die einzelnen Merkmale können jeweils entweder separat oder in Kombination als Ausführungsformen der Erfindung verwirklicht werden. Weiterhin können sie vorteilhafte Ausführungen beschreiben, die selbstständig schutzfähig sind.

### Kurzbeschreibung der Figuren

**Fig. 1** zeigt eine Verschaltung von mehreren Destillationskolonnen mit Adsorber gemäß Stand der Technik.
**Fig. 2** zeigt eine Trennwandkolonne ohne Adsorber gemäß Stand der Technik.

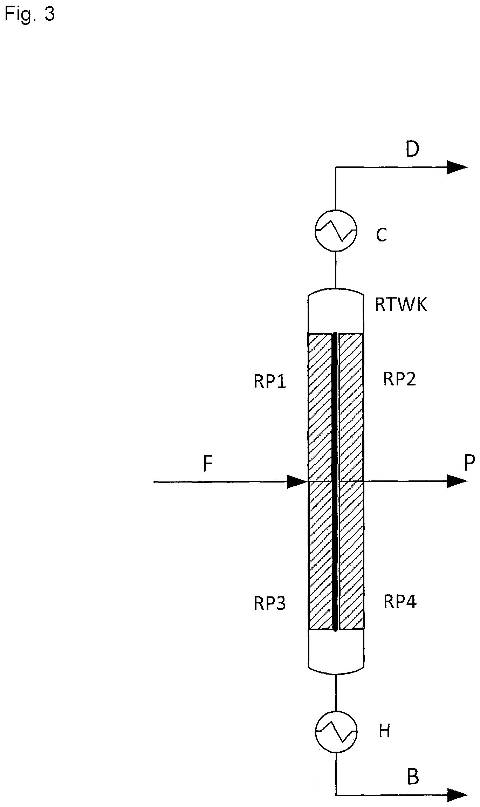

**Fig. 3** zeigt eine reaktive Trennwandkolonne ohne Adsorber gemäß Stand der Technik.
**Fig. 4** zeigt eine Trennwandkolonne durch Kopplung von zwei bestehenden Trennwandkolonnen mit Adsorbern gemäß Erfindung.

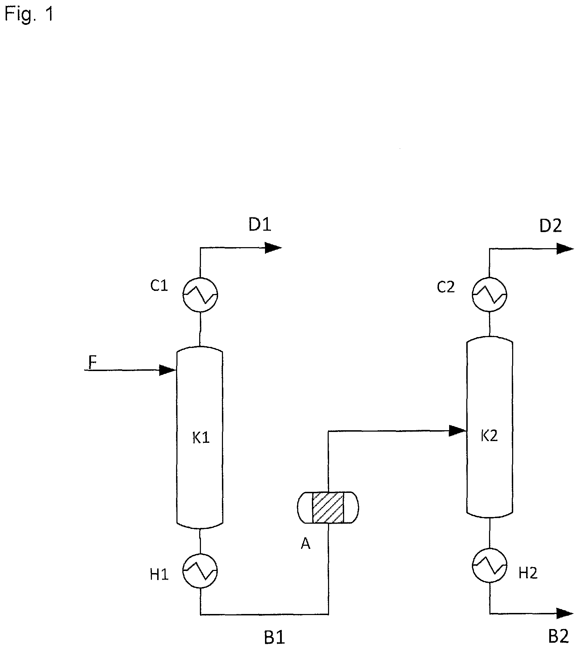

**Fig. 1** zeigte eine erste Kolonne **K1,** die über einen Kondensator **C1** und einen Verdampfer **H1** verfügt, über die hauptsächlich leichtsiedende Komponenten über den Stoffstrom **D1** abgetrennt werden. Der flüssige Stoffstrom **B1** gelangt in den Adsorber **A.** Wahlweise kann über einen Seitenabzug ein gasförmiger Stoffstrom **B2** in den Adsorber gefahren werden. Im Adsorber **A** werden borhaltige Komponenten wahlweise adsorbiert oder umgewandelt. In der zweiten Kolonne **K2,** die über einen Kondensator **C2** und einen Verdampfer **H2** verfügt, werden vorwiegend schwersiedende Komponenten über den Stoffstrom **B3** abgetrennt. Über Kopf kann das Produkt **D2** erhalten werden, welches entweder weitere Destillationsschritte durchläuft oder direkt als polykristallines Silicium abgeschieden werden kann.

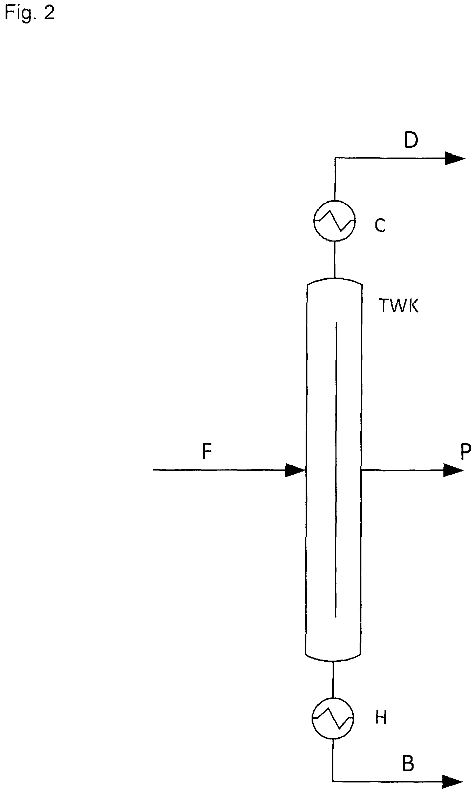

Bei der Anordnung in **Fig. 2** gelangt der Zugabestrom **F** in die Kolonne **TWK,** die einen Verdampfer H und einen Kondensator **C** besitzt. Über den Stoffstrom **D** werden vorwiegend leichtflüchtige Verbindungen abgetrennt. Der Stoffstrom **B** enthält vorwiegend schwersiedende Verbindungen. Mittels eines Seitenabzugs kann das Produkt **P** erhalten werden, welches entweder weitere Destillationsschritte durchläuft oder direkt als polykristallines Silicium abgeschieden werden kann.

Bei der Anordnung in **Fig. 2** gelangt der Zugabestrom **F** in die Kolonne **RTWK,** die einen Verdampfer **H** und einen Kondensator **C** besitzt. Über den Stoffstrom **D** werden vorwiegend leichtflüchtige Verbindungen abgetrennt. Der Stoffstrom **B** enthält vorwiegend schwersiedende Verbindungen. Mittels eines Seitenabzugs kann das Produkt **P** erhalten werden, welches entweder weitere Destillationsschritte durchläuft oder direkt als polykristallines Silicium abgeschieden werden kann. Die Einbauten **RP1 - 4** sind mit Adsorbermaterial beschichtet, so dass an dessen Oberflächen borhaltige Komponenten wahlweise adsorbiert oder umgewandelt werden.

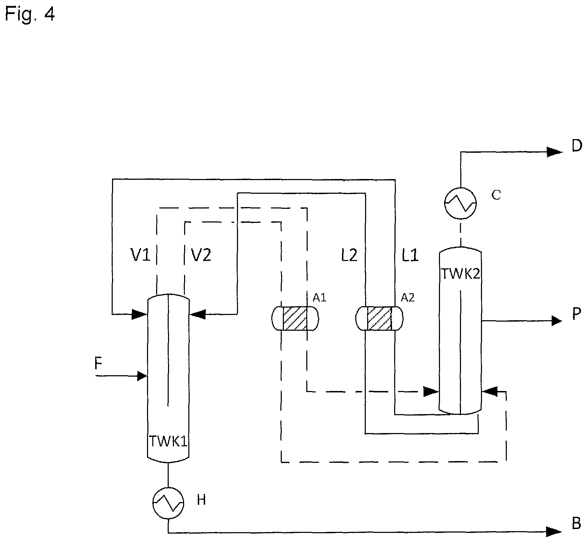

In **Fig. 4** ist gezeigt, dass der Zugabestrom **F** in die erste Kolonne **TWK1** gelangt, die über einen Verdampfer **H** und eine Trennwand verfügt. In dieser Kolonne werden über den Sumpfproduktstrom **B** vorwiegend schwersiedende Verbindungen abgetrennt. Die Dampfströme **V1** und **V2** aus **TWK1** können nun außerhalb der Kolonne über den Adsorber **A1** geführt werden. Es besteht die Möglichkeit sowohl beide Ströme, als auch jeweils nur einen der beiden Ströme über den Adsorber **A1** zu führen. Nach den Adsorbern werden die Dampfströme in die Trennwandkolonne **TWK2** eingeleitet. Die Kolonne **TWK2** besitzt einen Kondensator **C** und eine Trennwand. Über den Stoffstrom **D** werden vorwiegend leichtsiedende Verbindungen abgetrennt. Das Zielprodukt wird über einen Seitenabzug im Stoffstrom **P** abgetrennt, welches entweder weitere Destillationsschritte durchläuft oder direkt als polykristallines Silicium abgeschieden werden kann. Die beiden flüssigen Stoffströme **L1** und **L2,** die **TWK2** im Sumpf verlassen, gelangen in den Adsorber **A2.** Es besteht die Möglichkeit sowohl beide Ströme, als auch jeweils nur einen der beiden Ströme über den Adsorber **A2** zu führen. Nach dem Adsorber werden beide Stoffströme in der Kolonne **TWK1** als Rücklauf aufgegeben.

### Beispiele und Vergleichsbeispiel

Der Stoffstrom **F** besteht bei **Vergleichsbeispiel** und **Beispielen 1** und **2** aus einem chlorsilanhaltigen Gemisch mit einer Leichtsiederfraktion, bestehend aus MCS und DCS (Mono- und Dichlorsilan) und l1, wobei l1 leichtsiedende Spurenkomponenten enthaltend Bor, Phosphor und Arsen, beispielsweise BCl₃, PH₃ oder AsH₃, repräsentiert. Die Siedepunkte dieser Komponenten sind bei Standardbedingungen kleiner als 32 °C.

Weiterhin ist enthalten eine Mittelsiederfraktion, bestehend aus TCS (Trichlorsilan) und l2, wobei l2 mittelsiedende Spurenkomponenten enthaltend Bor, Phosphor und Arsen, beispielsweise B₂Cl₄, repräsentiert. Die Siedepunkte dieser Komponenten sind bei Standardbedingungen im Bereich von 32 °C.

Weiterhin ist enthalten eine Schwersiederfraktion bestehend aus STC (Tetrachlorsilan), Hochsiedern, wobei Hochsieder Di- und Oligosilane repräsentieren und l3, wobei l3 hochsiedende Spurenkomponenten enthaltend Bor, Phosphor und Arsen, beispielsweise B-O-Verbindungen, repräsentiert. Die Siedepunkte dieser Komponenten sind bei Standardbedingungen größer als 32 °C.

### Vergleichsbeispiel - Klassische Schaltung

**Fig. 1** zeigt eine klassische Destillationsanordnung bestehend aus einer Abtriebskolonne **K1** inklusive Verdampfer **H1** und Kondensator **C1** sowie einer Verstärkungskolonne **K2** inklusive Verdampfer **H2** und Kondensator **C2.** Zwischen den beiden Kolonnen befindet sich der Adsorber **A.**

In der Kolonne **K1** wird die Leichtsiederfraktion über den Stoffstrom **D1** abgetrennt. Der Stoffstrom **B1** bzw. **B2** wird über den Adsorber **A** gefahren. Im Adsorber werden Verunreinigungen im Spurenbereich enthaltend Bor, Phosphor und Arsen adsorbiert und teilweise hydrolisiert. In der zweiten Kolonne **K2** wird über den Stoffstrom **B3** die Schwersiederfraktion und über den Stoffstrom **D2** das Zielprodukt (Mittelsiederfraktion) abgezogen.

**Tabelle 1** zeigt die Massenanteile der einzelnen Komponenten in den jeweiligen Teilströmen gemäß **Vergleichsbeispiel.**

**Tabelle 1**

| Stoffstrom | F | D1 | B1 | D2 | B2 |
|---|---|---|---|---|---|
| Komponente | | | | | |
| TCS | 98,960 % | 90,000 % | 99,999 % | 99,999 % | 99,999 % |
| DCS | 1 % | 10 % | - | - | - |
| l1 | 3000 ppbw | 30 ppmw | 900 ppta | - | - |
| l2 | 1000 ppta | - | 1100 ppta | 1200 ppta | - |
| l3 | 100,0 ppba | - | 110 ppba | - | 10 ppba |
| STC | 100 ppmw | - | 110 ppmw | - | 1500 ppmw |
| Hochsieder | 200 ppmw | - | 220 ppmw | - | 3000 ppmw |

Der Zielproduktstrom **D2** enthält vorwiegend TCS und die mittelsiedenden Verunreinigungen l2.

### Beispiel 1 - Trennwandkolonne mit Adsorber

**Fig. 4** zeigt die bevorzugte Ausführungsform einer erfindungsgemäßen Trennwandkolonne mit Adsorber umfassend eine erste Destillationskolonne **TWK1,** die als Trennwandkolonne ausgeführt ist, inklusive Verdampfer H sowie einer zweiten Destillationskolonne **TWK2,** die ebenfalls als Trennwandkolonne ausgeführt ist, inklusive Kondensator **C.** Zwischen den beiden Kolonnen befinden sich die Adsorber **A1** und **A2.**

In der Kolonne **TWK1** wird die Schwersiederfraktion über den Stoffstrom **B** abgetrennt. In der zweiten Kolonne **TWK2** wird über den Stoffstrom **D** die Leichtsiederfraktion und über den Stoffstrom **P** das Zielprodukt (Mittelsiederfraktion) abgezogen. Die Flüssigkeitsströme **L1** und **L2** sowie die Produktdampfströme **V1** und **V2** können jeweils über die Adsorber **A1** und **A2** gefahren werden, um aus diesen Stoffströmen Verunreinigungen im Spurenbereich enthaltend Bor, Phosphor und Arsen abzutrennen, bzw. zu hydrolisieren. Durch die erfindungsgemäße Ausführung steht bei der Fahrweise über beide Adsorber **A1** und **A2** die doppelte Adsorberkapazität zur Verfügung.

**Tabelle 2** zeigt die Massenanteile der einzelnen Komponenten in den jeweiligen Teilströmen gemäß **Beispiel 1** für den Fall, dass nur Adsorber **A2** in Betrieb ist.

**Tabelle 2**

| Stoffstrom | F | D | B | P |
|---|---|---|---|---|
| Komponente | | | | |
| TCS | 98,960 % | 85 % | 99,999 % | 99,999 % |
| DCS | 1 % | 15 % | - | - |
| l1 | 3000 ppbw | 45 ppmw | - | - |
| l2 | 1000 ppta | - | 4 ppba | 1200 ppta |
| l3 | 100 ppba | - | 2000 ppba | - |
| STC | 100 ppmw | - | 2000 ppmw | - |
| HS | 200 ppmw | - | 4000 ppmw | - |

Der Zielproduktstrom **P** enthält vorwiegend die TCS und die mittelsiedenden Verunreinigungen l2. Der Anteil dieser Verbindungen ist in **Beispiel 1** geringer als im **Vergleichsbeispiel.** Es findet in den beiden Nebenströmen eine höhere Konzentrierung der Spurenkomponenten statt. Der Anfall von Nebenprodukt verringert sich und die Abreicherung der Verunreinigungen erfolgt in höherem Maße.

**Tabelle 3** zeigt die Massenanteile der einzelnen Komponenten in den jeweiligen Teilströmen gemäß **Beispiel 1** für den Fall, dass Adsorber **A1** und **A2** in Betrieb sind.

**Tabelle 3**

| Stoffstrom | F | D | B | P |
|---|---|---|---|---|
| Komponente | | | | |
| TCS | 98,960 % | 85 % | 99,999 % | 99,999 % |
| DCS | 1 % | 15 % | - | - |
| l1 | 3000 ppbw | 45 ppmw | - | - |
| l2 | 1000 ppta | - | 19 ppba | 20 ppta |
| l3 | 100 ppba | - | 2000 ppba | - |
| STC | 100 ppmw | - | 2000 ppmw | - |
| HS | 200 ppmw | - | 4000 ppmw | - |

Der Zielproduktstrom **P** enthält vorwiegend die TCS und die mittelsiedenden Verunreinigungen l2. Der Anteil dieser Verbindungen ist im Falle der Fahrweise mit beiden Adsorbern **A1** und **A2** noch geringer als bei der Fahrweise mit nur einem Adsorber. Der Anteil der mittelsiedenden Verunreinigungen im Nebenproduktstrom **B** ist ebenfalls höher.

Es kann somit festgehalten werden, dass die erfindungsgemäße Ausführung gemäß **Beispiel 1** zwei Vorteile gegenüber dem **Vergleichsbeispiel** hat.

Der spezifische Energieeinsatz für die gleiche Trennaufgabe ist bei **Beispiel 1** um ca. 50 % geringer als im **Vergleichsbeispiel.**

Zusätzlich zur Energieeinsparung erfolgt die Abtrennung der mittelsiedenden Verunreinigungen B in **Beispiel 1** besser als im **Vergleichsbeispiel.**

In den Zielproduktströmen P befinden sich nur noch 20 ppta der Komponente B, wobei im vergleichbaren Produkt D2 des **Vergleichsbeispiels** 1200 ppta vorhanden sind.

Der Grund für die bessere Abtrennung der Komponente B durch die erfindungsgemäße Ausführung, liegt in der Möglichkeit der doppelten Adsorbernutzung sowohl in der Gas- als auch in der Flüssigphase. Zusammen mit dem geringeren Energiebedarf kann eine deutlich effektivere Abtrennung der Komponente l2 erfolgen.

Die vorstehende Beschreibung beispielhafter Ausführungsformen ist exemplarisch zu verstehen. Die damit erfolgte Offenbarung ermöglicht es dem Fachmann einerseits, die vorliegende Erfindung und die damit verbundenen Vorteile zu verstehen, und umfasst andererseits im Verständnis des Fachmanns auch offensichtliche Abänderungen und Modifikationen der beschriebenen Strukturen und Verfahren. Daher sollen alle derartigen Abänderungen und Modifikationen sowie Äquivalente durch den Schutzbereich der Ansprüche abgedeckt sein.

## Patentansprüche

1. Verfahren zur destillativen Trennung eines Mehrkomponentengemisches, enthaltend
einen Leichtsieder umfassend Dichlorsilan und wenigstens eine bor-, phosphor- oder arsenhaltige Verunreinigung,
einen Mittelsieder umfassend Trichlorsilan und wenigstens eine bor-, phosphor- oder arsenhaltige Verunreinigung,
und einen Schwersieder umfassend Siliciumtetrachlorid,
wobei das Mehrkomponentengemisch einer ersten Kolonne zugeführt wird, durch die der wenigstens eine Schwersieder umfassend Siliciumtetrachlorid als Sumpffraktion abgetrennt wird und eine Kopffraktion umfassend Dichlorsilan, Trichlorsilan und wenigstens eine bor-, phosphor- oder arsenhaltige Verunreinigung einer zweiten Destillationskolonne zugeführt wird, wobei in der zweiten Destillationskolonne der wenigstens eine Mittelsieder umfassend Trichlorsilan über einen Seitenabzug und der wenigstens eine Leichtsieder umfassend Dichlorsilan als Kopffraktion abgetrennt werden, wobei wenigstens ein Sumpfabzug der zweiten Destillationskolonne über einen Adsorber zur Abtrennung der wenigstens einen bor-, phosphor- oder arsenhaltigen Verunreinigung geführt und anschließend wieder der ersten Destillationskolonne als Rücklauf zugeführt wird, wobei beide Destillationskolonnen vertikale Trennwände aufweisen, wobei die Trennwand der ersten Destillationskolonne bis an das obere Ende der Destillationskolonne und die Trennwand der zweiten Destillationskolonne bis an das untere Ende der Destillationskolonne reicht.

2. Verfahren nach Anspruch 1, wobei Flüssigkeitsströme von zwei Sumpfabzügen vorhanden sind und einer der Flüssigkeitsströme oder beide Flüssigkeitsströme über den Adsorber geführt und dann als Rücklauf der ersten Destillationskolonne zugeführt werden.

3. Verfahren nach Anspruch 1, wobei statt eines Adsorber in Flüssigkeitsströmen zwischen Sumpfabzug der zweiten Destillationskolonne und Rücklauf der ersten Destillationskolonne ein Adsorber in den Dampfströmen von erster zu zweiter Destillationskolonne platziert wird.

4. Verfahren nach Anspruch 3, wobei die Kopffraktion der ersten Destillationskolonne über zwei Dampfströme dem Abtriebsteil der zweiten Destillationskolonne zugeführt wird und einer der Dampfströme oder beide Dampfströme über den Adsorber geführt werden, bevor sie der zweiten Destillationskolonne zugeführt werden.

5. Verfahren nach Anspruch 1, wobei zwei Adsorber vorhanden sind, wobei über einen ersten Adsorber ein oder zwei Dampfströme zwischen erster und zweiter Destillationskolonne geführt werden und über einen zweiten Adsorber ein oder zwei Flüssigkeitsströme von zweiter Destillationskolonne in den Rücklauf der ersten Destillationskolonne geführt werden.

6. Vorrichtung zur destillativen Trennung eines Mehrkomponentengemisches, umfassend zwei Destillationskolonnen, die stofflich miteinander gekoppelt sind, indem Brüden einer ersten Destillationskolonne kommunikativ mit dem Sumpf einer zweiten Destillationskolonne und Sumpfabzüge der zweiten Destillationskolonne kommunikativ mit einer Rücklaufsektion der ersten Destillationskolonne verbunden sind, wobei in die kommunikative Verbindung zwischen Sumpfabzügen der zweiten Destillationskolonne und der Rücklaufsektion der ersten Destillationskolonne oder in die kommunikative Verbindung zwischen Sumpfabzügen der zweiten Destillationskolonne und Rücklaufsektion der ersten Destillationskolonne ein Adsorber zur Abtrennung von bor-, phosphor- oder arsenhaltigen Verunreinigungen eingebracht ist, wobei beide Destillationskolonnen vertikale Trennwände aufweisen, wobei die Trennwand der ersten Destillationskolonne bis an das obere Ende der Destillationskolonne und die Trennwand der zweiten Destillationskolonne bis an das untere Ende der Destillationskolonne reicht und wobei die zweite Destillationskolonne einen oder mehrere Seitenabzüge unterhalb des Kopfabzuges und oberhalb des Sumpfabzuges aufweist.

7. Vorrichtung nach Anspruch 6, wobei in beide kommunikativen Verbindungen zwischen erster und zweiter Destillationskolonne jeweils ein Adsorber zur Abtrennung von bor-, phosphor- oder arsenhaltigen Verunreinigungen eingebracht ist.

## Claims

1. Process for distillative separation of a multicomponent mixture
comprising
a low boiler comprising dichlorosilane and at least one boron-, phosphorus- or arsenic-containing impurity,
a middle boiler comprising trichlorosilane and at least one boron-, phosphorus- or arsenic-containing impurity,
and a high boiler comprising silicon tetrachloride, wherein the multicomponent mixture is supplied to a first column to remove the at least one high boiler comprising silicon tetrachloride as bottoms fraction and a tops fraction comprising dichlorosilane, trichlorosilane and at least one boron-, phosphorus- or arsenic-containing impurity is supplied to a second distillation column, wherein in the second distillation column the at least one middle boiler comprising trichlorosilane is removed via a side draw and the at least one low boiler comprising dichlorosilane is removed as tops fraction, wherein at least one bottom draw from the second distillation column is passed through an adsorber for removing the at least one boron-, phosphorus- or arsenic-containing impurity and subsequently returned to the first distillation column as reflux, wherein both distillation columns comprise vertical dividing walls, wherein the dividing wall of the first distillation column extends as far as the upper end of the distillation column and the dividing wall of the second distillation column extends as far as the lower end of the distillation column.

2. Process according to Claim 1, wherein liquid streams from two bottom draws are present and one of the liquid streams or both liquid streams are passed through the adsorber and then supplied to the first distillation column as reflux.

3. Process according to Claim 1, wherein instead of an adsorber in liquid streams between the bottom draw of the second distillation column and the reflux of the first distillation column an adsorber is placed in the vapor streams passing from the first to the second distillation column.

4. Process according to Claim 3, wherein the tops fraction from the first distillation column is supplied to the stripping section of the second distillation column via two vapor streams and one of the vapor streams or both vapor streams are passed through the adsorber before being supplied to the second distillation column.

5. Process according to Claim 1, wherein two adsorbers are present, wherein one or two vapor streams are passed between the first and the second distillation column through a first adsorber and one or two liquid streams are passed from the second distillation column into the reflux of the first distillation column through a second adsorber.

6. Apparatus for distillative separation of a multicomponent mixture comprising two distillation columns materially coupled to one another by vapors from a first distillation column being in communicative connection with the bottom of a second distillation column and bottom draws of the second distillation column being in communicative connection with a reflux section of the first distillation column, wherein an adsorber for removing boron-, phosphorus- or arsenic-containing impurities is disposed in the communicative connection between the bottom draws of the second distillation column and the reflux section of the first distillation column or in the communicative connection between the bottom draws of the second distillation column and the reflux section of the first distillation column, wherein both distillation columns comprise vertical dividing walls,wherein the dividing all of the first distillation column extends as far as the upper end of the distillation column and the dividing wall of the second distillation column extends as far as the lower end of the distillation column and wherein the second distillation column comprises one or more side draws below the top draw and above the bottom draw.

7. Apparatus according to Claim 6, wherein both communicative connections between the first and the second distillation column each have disposed in them an adsorber for removing boron-, phosphorus- or arsenic-containing impurities.

## Revendications

1. Procédé de séparation par distillation d'un mélange multicomposant, contenant :
un composant de point d'ébullition faible comprenant du dichlorosilane et au moins une impureté contenant du bore, du phosphore ou de l'arsenic,
un composant de point d'ébullition moyen comprenant du trichlorosilane et au moins une impureté contenant du bore, du phosphore ou de l'arsenic,
et un composant de point d'ébullition élevé comprenant du tétrachlorure de silicium,
selon lequel le mélange multicomposant est introduit dans une première colonne, par laquelle ledit au moins un composant de point d'ébullition élevé comprenant du tétrachlorure de silicium est séparé en tant que fraction de fond, et une fraction de tête comprenant du dichlorosilane, du trichlorosilane et au moins une impureté contenant du bore, du phosphore ou de l'arsenic est introduite dans une deuxième colonne de distillation, ledit au moins un composant de point d'ébullition moyen comprenant du trichlorosilane étant séparé par une sortie latérale dans la deuxième colonne de distillation et ledit au moins un composant de point d'ébullition faible comprenant du dichlorosilane étant séparé en tant que fraction de tête, au moins une sortie de fond de la deuxième colonne de distillation étant passée sur un adsorbeur pour la séparation de ladite au moins une impureté contenant du bore, du phosphore ou de l'arsenic, puis réintroduite dans la première colonne de distillation en tant que reflux, les deux colonnes de distillation comprenant des parois de séparation verticales, la paroi de séparation de la première colonne de distillation s'étendant jusqu'à l'extrémité supérieure de la colonne de distillation et la paroi de séparation de la deuxième colonne de distillation s'étendant jusqu'à l'extrémité inférieure de la colonne de distillation.

2. Procédé selon la revendication 1, dans lequel des courants de liquide de deux sorties de fond sont présents et un des courants de liquide ou les deux courants de liquide sont passés sur l'adsorbeur, puis introduits en tant que reflux dans la première colonne de distillation.

3. Procédé selon la revendication 1, dans lequel un adsorbeur est placé dans les courants de vapeur de la première vers la deuxième colonne de distillation au lieu d'un adsorbeur dans les courants de liquide entre la sortie de fond de la deuxième colonne de distillation et le reflux de la première colonne de distillation.

4. Procédé selon la revendication 3, dans lequel la fraction de tête de la première colonne de distillation est introduite par le biais de deux courants de vapeur dans la zone de rectification de la deuxième colonne de distillation et un des courants de vapeur ou les deux courants de vapeur sont passés sur l'adsorbeur avant d'être introduits dans la deuxième colonne de distillation.

5. Procédé selon la revendication 1, dans lequel deux adsorbeurs sont présents, un ou deux courants de vapeur étant passés sur un premier adsorbeur entre la première et la deuxième colonne de distillation, et un ou deux courants de liquide de la deuxième colonne de distillation étant introduits en tant que reflux dans la première colonne de distillation en passant sur un deuxième adsorbeur.

6. Dispositif pour la séparation par distillation d'un mélange multicomposant, comprenant deux colonnes de distillation, qui sont couplées l'une avec l'autre en termes de matières, dans lequel les vapeurs d'une première colonne de distillation communiquent avec le fond d'une deuxième colonne de distillation, et les sorties de fond de la deuxième colonne de distillation communiquent avec une section de reflux de la première colonne de distillation, un adsorbeur pour la séparation d'impuretés contenant du bore, du phosphore ou de l'arsenic étant disposé dans la liaison de communication entre les sorties de fond de la deuxième colonne de distillation et la section de reflux de la première colonne de distillation ou dans la liaison de communication entre les sorties de fond de la deuxième colonne de distillation et la section de reflux de la première colonne de distillation, les deux colonnes de distillation comprenant des parois de séparation verticales, la paroi de séparation de la première colonne de distillation s'étendant jusqu'à l'extrémité supérieure de la colonne de distillation et la paroi de séparation de la deuxième colonne de distillation s'étendant jusqu'à l'extrémité inférieure de la colonne de distillation, et la deuxième colonne de distillation comprenant une ou plusieurs sorties latérales en dessous de la sortie de tête et au-dessus de la sortie de fond.

7. Dispositif selon la revendication 6, dans lequel un adsorbeur pour la séparation d'impuretés contenant du bore, du phosphore ou de l'arsenic est disposé dans les deux liaisons de communication entre la première et la deuxième colonne de distillation.
